# EUROPEAN PATENT APPLICATION

(11) **EP 4 576 041 A1**
(43) Date of publication of application: **25.06.2025**
(21) Application number: 24220712.4
(22) Date of filing: 17.12.2024
(51) Int. Cl.: G08G 1/04, B60K 35/28, B60R 1/24, G06V 20/58, G08G 1/0967, G08G 1/16

(54) **PROVIDING AWARENESS OF OBJECTS LOCATED IN THE PATH OF A VEHICLE**

(30) Priority: 21.12.2023 US 202318391988
(71) Applicant: Volvo Car Corporation, 405 31 Göteborg (SE)
(72) Inventor: Eriksson, Robert, SE-405 31 Göteborg (SE); Forssell, Jonas, SE-405 31 Göteborg (SE); Larsson, Torbjorn, SE-405 31 Göteborg (SE); Härsjö, Joachim, SE-405 31 Göteborg (SE)
(74) Representative: Nederlandsch Octrooibureau

(57) **Abstract**

A method for providing awareness of objects located in a path of a vehicle. The method includes capturing data on an external environment using at least one perception sensor. The method further includes detecting one or more objects in the path of the vehicle based on the data that is captured. The method further includes estimating locations of the one or more objects in the path of the vehicle. The method further includes presenting one or more virtual objects using at least one display positioned inside the vehicle, where the one or more virtual objects represent the one or more objects that are detected.

## Description

### INTRODUCTION

The present disclosure relates generally to the automotive fields. When a vehicle is traveling, the driver may not be able to see hazardous obstacles in the road due to dark conditions or otherwise poor visibility even with headlights on. Hazardous obstacles may include, for example, animals that wander on the road, boulders, etc. It may be also be difficult for the driver to see driving lanes.

The present introduction is provided as background context only and is not intended to be limiting in any manner. It will be readily apparent to those of ordinary skill in the art that the concepts and principles of the present disclosure may be implemented in other applications and contexts equally.

### SUMMARY

The present disclosure relates to a system for providing awareness of objects located in a path of a vehicle during low-visibility. As described in more detail herein, embodiments enable the system to detect and identify objects located in the path of a vehicle that the driver might not see due to poor visibility. The system automatically uses perception sensors to detect, identify, and display such objects in a display to assist the driver in safe driving. As described in more detail herein, such objects may include potentially hazardous objects, where the system alerts the driver of such objects. Other objects may include road markers such as road lines. As described in more detail herein, the system displays virtual representations of hazardous objects and road markers for the driver to better navigate a poorly visible road.

In one illustrative embodiment, the present disclosure provides a computer-implemented method for providing awareness of objects located in a path of a vehicle. The method includes: capturing data on an external environment using at least one perception sensor; detecting one or more objects in the path of the vehicle based on the data that is captured; estimating locations of the one or more objects in the path of the vehicle; and presenting one or more virtual objects using at least one display positioned inside the vehicle, where the one or more virtual objects represent the one or more objects that are detected. Optionally, the one or more objects in the path of the vehicle are hazardous obstacles. In some embodiments, the one or more objects in the path of the vehicle are road markers. In some embodiments, the method further includes fetching crowdsourced data on potentially hazardous obstacles in the path of the vehicle. In some embodiments, the one or more virtual objects presented using the at least one display are virtual hazardous obstacles. In some embodiments, the one or more objects presented using the at least one display are virtual road lines. In some embodiments, the method further includes alerting a driver of the vehicle if one or more of the detected objects are potentially hazardous obstacles. In some embodiments, the at least one perception sensor may comprise at least one of a camera, a radar detector, a light detection and ranging (Lidar) camera, or an ultrasonic camera.

In another illustrative embodiment, the present disclosure provides an assembly for a vehicle, the assembly including: at least one perception sensor; at least one display positioned inside the vehicle; and a system including one or more processors and logic encoded in one or more non-transitory computer-readable storage media for execution by the one or more processors. The logic when executed is operable to cause the one or more processors to perform operations including: capturing data on an external environment using the at least one perception sensor; detecting one or more objects in a path of the vehicle based on the data that is captured; estimating locations of the one or more objects in the path of the vehicle; and presenting one or more virtual objects using the at least one display positioned inside the vehicle, where the one or more virtual objects represent the one or more objects that are detected. Optionally, the one or more objects in the path of the vehicle are hazardous obstacles. In some embodiments, the one or more objects in the path of the vehicle are road markers. In some embodiments, the logic when executed is further operable to cause the one or more processors to perform operations including fetching crowdsourced data on potentially hazardous obstacles in the path of the vehicle. In some embodiments, the one or more virtual objects presented using the at least one display are virtual hazardous obstacles. In some embodiments, the one or more objects presented using the at least one display are virtual road lines. In some embodiments, the logic when executed is further operable to cause the one or more processors to perform operations including alerting a driver of the vehicle if one or more of the detected objects are potentially hazardous obstacles. In some embodiments, the at least one perception sensor may comprise at least one of a camera, a radar detector, a light detection and ranging (Lidar) camera, or an ultrasonic camera.

In a further illustrative embodiment, the present disclosure provides a non-transitory computer-readable storage medium with program instructions stored thereon. The program instructions when executed by one or more processors are operable to cause the one or more processors to perform operations including: capturing data on an external environment using at least one perception sensor; detecting one or more objects in a path of the vehicle based on the data that is captured; estimating locations of the one or more objects in the path of the vehicle; and presenting one or more virtual objects using at least one display positioned inside the vehicle, where the one or more virtual objects represent the one or more objects that are detected. Optionally, the one or more objects in the path of the vehicle are hazardous obstacles. In some embodiments, the one or more objects in the path of the vehicle are road markers. In some embodiments, the instructions when executed are further operable to cause the one or more processors to perform operations including fetching crowdsourced data on potentially hazardous obstacles in the path of the vehicle.

### BRIEF DESCRIPTION OF THE DRAWINGS

The present disclosure is illustrated and described with reference to the various drawings, in which like reference numbers are used to denote like assembly and/or system components and/or method steps, as appropriate.
FIG. 1 is a side-view block diagram of an example environment for providing awareness of objects located in the path of a vehicle.
FIG. 2 is a flow chart for providing awareness of objects located in the path of a vehicle.
FIG. 3 is a top-view block diagram of the example external environment, where a vehicle is traveling on a vehicle path with an object on the vehicle path.
FIG. 4 is a block diagram of an environment, showing a view toward the front interior of a vehicle.
FIG. 5 is a top-view block diagram of the example external environment, where a vehicle is traveling on a vehicle path with objects that include a dashed road line and a solid road line on the vehicle path.
FIG. 6 is a block diagram of an environment, showing a view toward the front interior of a vehicle.
FIG. 7 is a block diagram of an example network environment of the present disclosure.
FIG. 8 is a block diagram of an example computing system of the present disclosure.

### DETAILED DESCRIPTION

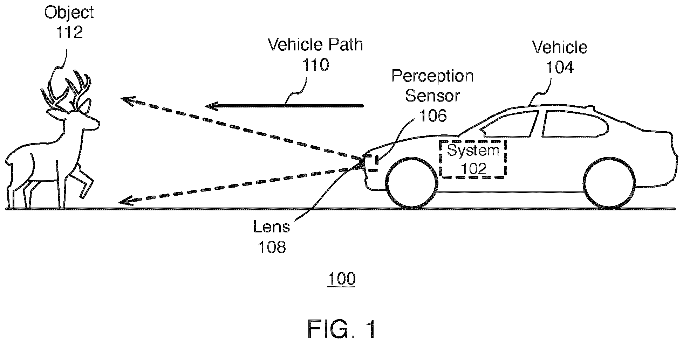

FIG. 1 is a side-view block diagram of an example environment 100 for providing awareness of objects located in the path of a vehicle. As shown, the assembly includes a system 102 of a vehicle 104 and at least one perception sensor 106 with a lens 108. In some embodiments, the perception sensor 106 and/or other perception sensors may be positioned at an exterior portion of the vehicle. Being positioned at the exterior portion of the vehicle 104 means that at least one portion of the perception sensor 106 (e.g., the lens 108) is exposed to the environment 100, or external environment 100. In some embodiments, one or more of the perception sensors may be positioned at an interior portion of the vehicle. For example, one or more of the perception sensors may be positioned inside with view through a window (e.g., behind the front windshield, near the rear-view mirror, etc. As such, the perception sensor 106 and/or or other perception sensors capture various types of data on the external environment 100.

For ease of illustration, one perception sensor 106 is shown. In various embodiments, the system 102 may utilize multiple perception sensors and multiple types of perception sensors and sensors to capture data on the external environment 100. Any sensing methodology may be used, and the particular sensing methodology will depend on the particular implementation. For example, in various embodiments, one or more perception sensors may include one or more image sensing perception sensors or cameras, radar detectors, light detection and ranging (Lidar) cameras, and/or ultrasonic cameras, or any combination thereof. The system may utilize image sensing perception sensors or cameras and/or infrared (IR) perception sensors or cameras and/or radar perception sensors or cameras. In various embodiments, the system may utilize any one or more of these perception sensors and/or other types of sensors and cameras to collect data. Such data collected may include data on any objects outside of the vehicle 104, including on the road. For example, such objects may include road surface features (e.g., bumps, potholes, etc.), environmental features (e.g., trash, alive or dead animals, rocks, boulders, etc.). Such objects may also include other vehicles or people. The data may include Lidar data and well as images. The images may be a continuous series of images, which may include video. For ease of illustration, the perception sensor is 106 is shown positioned on the bumper of the vehicle 104. In various embodiments, the perception sensor 106 and/or other cameras and sensors may also be positioned or mounted underneath the vehicle 104.

The perception sensor 106 may be referred to as a client device, which may communicate with the system 102. Such communication may be facilitated via any suitable communication network (not shown) such as a wired network, a Bluetooth network, a Wi-Fi network, etc., or any combination thereof.

In various embodiments, the data on the external environment 100 includes data on a ground surface of the vehicle path 110. In various embodiments, such data enables the system 102 to detect one or more objects in the path of the vehicle or vehicle path 110 based on the data that is captured. For example, the system 102 may detect an object 112 such as a deer or another animal or a potentially hazardous object in the vehicle path 110. As described in more detail herein, the system 102 estimates the locations of objects in the vehicle path 110 relative to the vehicle 104 based on the collected data. The system 102 also estimates the distances of such objects from the vehicle 104 based on the collected data.

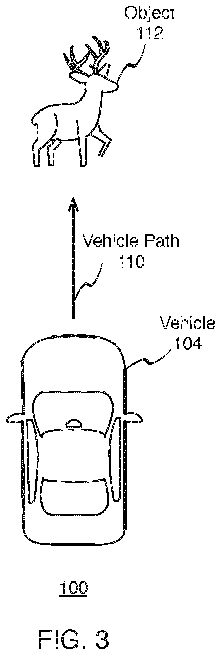

As described in more detail herein, the system 102 presents one or more virtual objects using one or more displays (not shown) positioned inside the vehicle, where the one or more virtual objects represent the one or more actual or physical objects that are detected. Further example embodiments directed to the detection of objects and the presentation of virtual objects representing the objects are described in more detail herein in connection with FIGS. 3 through 6.

For ease of illustration, FIG. 1 shows one block for each of the system 102 and the perception sensor 106. Blocks 102 and 106 may represent multiple systems and perception sensors. In other implementations, environment 100 may not have all of the components shown and/or may have other elements including other types of elements instead of, or in addition to, those shown herein.

While system 102 performs implementations described herein, in other implementations, any suitable component or combination of components associated with system 102 or any suitable processor or processors associated with system 102 may facilitate performing the implementations described herein.

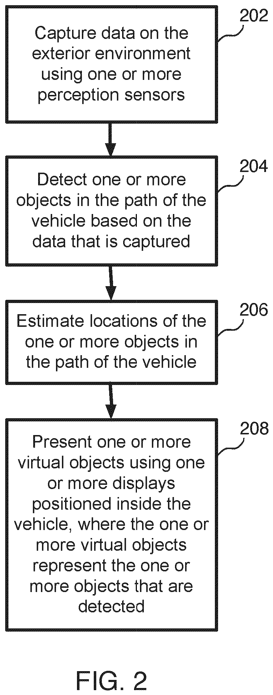

FIG. 2 is a flow chart for providing awareness of objects located in the path of a vehicle. As described in more detail herein, embodiments provide awareness of objects in a path of a vehicle during low visibility. Referring to both FIGS. 1 and 2, a method is initiated at block 202, where a system such as system 102 captures data on the external environment 100 using one or more perception sensors such as perception sensor 106. As indicated herein, in various embodiments, one or more of the perception sensors may be positioned at an exterior portion of the vehicle and/or at an interior portion of the vehicle (e.g., inside with view through a window, etc.). In various embodiments, the data collected on the external environment 100 includes data on a ground surface on the vehicle path 110. In various embodiments, the data on the external environment may include image data, infrared data, and/or Lidar data. The particular type of perception sensor used for the perception sensor 106 may vary and will depend on the particular implementation. Also, as indicated above, the perception sensor 106 may represent multiple sensors or cameras, which may include different types of perception sensors.

At block 204, the system 102 detects one or more objects in the path of the vehicle 104 based on the data that is captured. In various embodiments, one or more objects in the path of the vehicle or vehicle path 110 are hazardous obstacles. For example, referring to both FIGS. 1 and 3, the object 112 in the vehicle path 110 is a stag, which is a hazardous obstacle, as the vehicle 104 will strike the stag if the vehicle 104 continues traveling on the vehicle path 110.

FIG. 3 is a top-view block diagram of the example external environment 100, where the vehicle 104 is traveling on the vehicle path 110 with the object 112 on the vehicle path 110. For ease of illustration, the perception sensor 106 and system 102 are not shown. In this scenario, as the vehicle 104 continues on the vehicle path 110 toward the object 112, the vehicle 104 will hit the object 112 if the vehicle does not drive around or stop before reaching the object 112. As such, the object 112 is referred to as a hazardous obstacle. The object 112 may represent other types of hazardous obstacles, including other types of animals, trash, rocks, boulders, trees, road barriers, other vehicles, people, etc. These are objects that the driver of the vehicle 104 might not see due to poor visibility or other factors such as being distracted by a mobile device or another person in the vehicle 104.

In various embodiments, the system fetches crowdsourced data on potentially hazardous obstacles in the path of the vehicle. For example, the system may fetch crowdsourced data from other drivers who report potentially hazardous obstacles on the road. Crowdsourced data may be vehicle-to-vehicle (V2V) data. The system may also collect vehicle-to-infrastructure (V2I) data such as map data from the cloud and use global positioning system (GPS) technology to determine where the vehicle is located on a given road that has a reported hazardous object. In some embodiments, the system may be configured to report hazardous objects that the system detects and identifies to crowdsourcing applications.

In various embodiments, the system may use artificial intelligence (AI) and machine learning to track known objects that could cause damage to a vehicle on specific roads or parking areas. In some scenarios, some objects may be objects that are not inherently hazardous obstacles, yet are potentially hazardous based on the motion of the vehicle and the risk of driving into such obstacles. For example, such objects may also include permanently placed objects such as speed bumps or high curb transitions between a parking lot or driveway and a road.

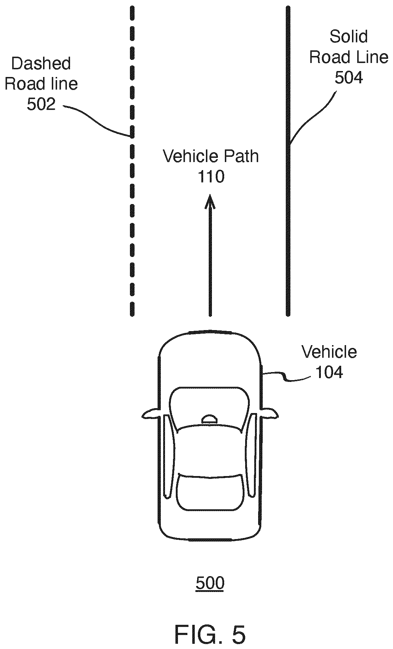

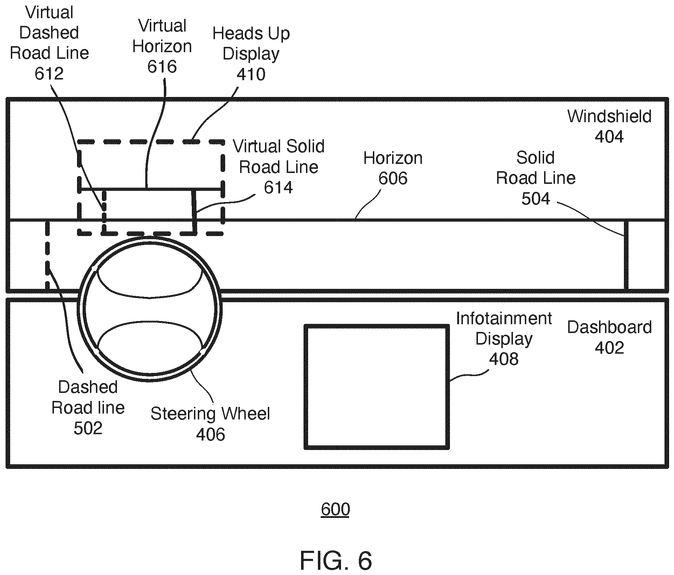

While some embodiments are described in the context of objects in the vehicle path 110 being hazardous obstacles, these embodiments and others may also be applied to non-hazardous objects. For example, in various embodiments, one or more objects in the path of the vehicle or vehicle path 110 are road markers. As described in more detail herein, the system aids the driver in seeing such road markers in connection with FIGS. 5 and 6, for example.

In various embodiments, the system may use AI and machine learning to track known objects that facilitate safe driving. For example, as indicated above, in some scenarios, some objects may be objects that are not obstacles, but are objects that facilitate safe driving such as road markers, road lines, road signs, etc.

In various embodiments, the vehicle path 110 is a predicted path. In various embodiments, the system may predict the vehicle path 110 based on one or more techniques. For example, in various embodiments, the system may collect map data from the cloud and use GPS technology to determine where the vehicle is located on a given road, and determine the vehicle path 110 based on the map and GPS position of the vehicle.

In various embodiments, the system may predict the vehicle path 110 based on the road that the perception sensor or perception sensors of vehicle 104 detect. For example, the system may detect, via one or more perception sensors, road markers or indicators (e.g., road lines, road signs, etc.) to predict the vehicle path 110. In some embodiments, the system may use AI and machine learning to determine the vehicle path 110 based on images of the shape of the road that one or more perception sensors capture ahead of the vehicle 104.

In various embodiments, the system may also predict the vehicle path 110 based on real-time steering wheel activity. The system may determine the rotational position of the steering wheel of the vehicle 104 and also determine if the steering wheel is rotating. The system may then predict the vehicle path 110 based on this information. For example, if the steering wheel is positioned such that the vehicle wheels are positioned to travel straight ahead and the steering wheel is not turning, the system may predict the vehicle path 110 to be directly straight ahead at that moment. If the system determines that the steering wheel is rotated either to the left or to the right to a particular degree, the system may predict that the vehicle path 110 is curving to a corresponding amount toward the corresponding direction to the left or to the right, accordingly. In various embodiments, the system may also determine the rate that the steering wheel is rotating and then predict the curvature of the vehicle path 110 based on the rotational rate of the steering wheel.

Referring still to FIG. 2, at block 206, the system 102 estimates locations of the one or more objects in the path of the vehicle. In various embodiments, the system 102 may use Lidar techniques to estimate the locations of objects in the vehicle path 110. The system 102 also computes the estimated location of a given object such as object 112 in relation to the front of the vehicle 104. As described in more detail herein, the system 102 warns or alerts the driver of any objects in the vehicle path 110 that may be hazardous obstacles such as object 112.

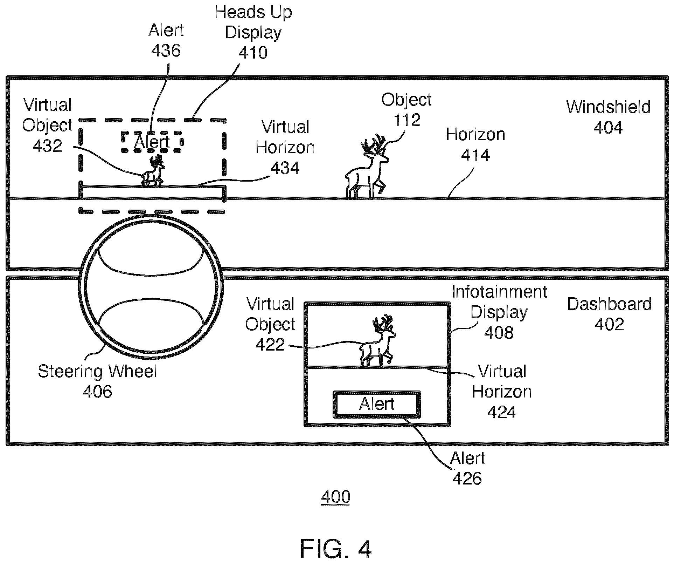

At block 208, the system presents one or more virtual objects using one or more displays positioned inside the vehicle 104. In various embodiments, the one or more virtual objects represent the one or more actual or physical objects that are detected in the external environment. In various embodiments, the one or more virtual objects presented using the one or more displays are virtual hazardous obstacles. The terms presented, displayed, depicted, and pictured may be used interchangeably. Example embodiments directed to presenting virtual objects in one or more displays are described in more detail below in connection with FIG. 4.

Although the steps, operations, or computations may be presented in a specific order, the order may be changed in particular implementations. Other orderings of the steps are possible, depending on the particular implementation. In some particular implementations, multiple steps shown as sequential in this specification may be performed at the same time. Also, some implementations may not have all of the steps shown and/or may have other steps instead of, or in addition to, those shown herein.

FIG. 4 is a block diagram of an environment 400, showing a view toward the front interior of a vehicle. This portion of the vehicle may be that of the vehicle 104 shown in FIGS. 1 and 3. Shown is a dashboard 402, a windshield 404, a steering wheel 406, an infotainment display 408, a heads up display 410, and the object 112. In this example scenario, the object 112 is visible through the windshield 404. Also shown is the object 112 or stag 112 on a horizon 414. However, due to low or poor visibility or low lighting conditions, the driver might not see the object 112. There may also be scenarios where the driver might not see the object 112 due to distractions. For example, such distractions may include the driver looking at the driver's mobile device instead of the vehicle path. Another example distraction may be the driver looking at another person in the vehicle during a conversation, etc.

In various embodiments, the system presents or displays the object 112 in the infotainment display 408 and/or the heads up display 410 in the form of respective virtual objects 432 and 422. For example, referring to the infotainment display 408, the system displays the virtual object 422 on a virtual horizon 424, as well as displaying an alert 426. Also, referring to the heads up display 410, the system displays the virtual object 432 on a virtual horizon 434, as well as displaying an alert 436. Both of the virtual objects 422 and 432 provide or increase visual awareness to the driver of the object 112, which in this example scenario is a hazardous obstacle.

In some scenarios, the driver may be visually and mentally focusing on the infotainment display 408 instead of the road. The driver will see the virtual object 422, the virtual horizon 424, as well as an alert 426 on the infotainment display 408 and become aware of the physical object 112 on the vehicle path. In some scenarios, the road visibility may be low or poor due to fog, rain, snow or other weather conditions, where the driver may not see potentially hazardous objects on the vehicle path. The driver will see the virtual object 432, the virtual horizon 434, as well as an alert 436 on the heads up display 410 and become aware of the physical object 112 on the vehicle path. As such, the virtual objects 422 and 432, and alerts 426 and 436 are near real-life views for the driver, which increase awareness of the external environment for safer driving.

In various embodiments, the heads up display 410 provides an augmented reality (AR) windshield showing the actual physical road and augments or overlays the road seen through the windshield 404 with the virtual object 432, virtual horizon 434, and other information such as the alert 436. As described in more detail herein, the system may utilize AR technology to augment difficult-to-see features in the driver's view. In other words, if the perception sensors detect a deer, the system may augment the view of the actual deer in the driver's view in the windshield. The heads up display 410 may utilize all the window surfaces via reflective projection or the like. As such, the system enhances the driver's actual eyes when it is determined that the visibility of the actual object may be poor or obscured. As described in more detail herein, the system may consult a database to determine deer and then decide how to best augment what the driver is seeing. The system provides predictive window that helps the driver see what may otherwise be obscured.

In various embodiments, in the infotainment display 408 and/or the heads up display 410, the system may provide enhanced versions of the physical object. For example, the system may capture the object 112 in the form of one or more images or video using one or more perception sensors. The system may process the images to enhance or clarify the images for better visibility. For example, the object 112 may be obscured due to weather elements such as fog, rain, snow, etc. The system may apply digital photography filters to display images of the object 112. Such filters may, for example, remove such weather elements from the images. As a result, an actual physical object that is not very visible becomes more visible such that the driver could make out better what the actual object really is.

In various embodiments, the system may display different types of images of a given object such as object 112 similarly. Different types of images may include, for example, enhanced or filtered images of a physical object, created representations of the physical object, representations of the physical object fetched from the cloud, etc. For clarity and ease of illustration, these different types of images are referred to as virtual to distinguish them from the actual physical object that may be less visible. Accordingly, the system displays virtual object 432, which is a virtual version of the physical object 112, on the infotainment display 408 and/or the heads up display 410 in a clear manner without obscurement.

In various embodiments, in the infotainment display 408 and/or the heads up display 410, the system may provide substitute representations of the physical object. For example, the system might not capture a clear image of the object 112 due to obscurement caused by weather elements such as fog, rain, snow, etc. In some scenarios, the headlights of the vehicle might suddenly go out. In such scenarios, the system may present or display outlined shapes or silhouettes representing the object 112 in the infotainment display 408 and/or the heads up display 410. In some embodiments, the system may fetch a representation of the object 112 such as an outline or silhouette or animated image or icon from an on-board library or database, and then display the representation in the infotainment display 408 and/or the heads up display 410. If the representation of the object is not available in an on-board library or database, the system may fetch the representation from the cloud. In some embodiments, in instances where the object 112 is moving, the system may display the object as a still frame of the captured video of the object for easier identification. In some embodiments, the system may update the virtual image/obj ect to a more recently captured image for greater accuracy. The system may also reposition or update the position of the virtual object on the infotainment display 408 and the heads up display 410 for greater accuracy.

In various implementations, the system positions the virtual objects 422 and 432 in the infotainment display 408 and/or the heads up display 410 at comparable locations to the position of the object 112 in the windshield 404. For example, if the object 112 is positioned in the middle of the windshield 404, the system will position the virtual objects 422 and 432 in the middle of the infotainment display 408 and/or the heads up display 410. If the object 112 is positioned on the left or right of the windshield 404, the system will position the virtual objects 422 and 432 on the left or right of the infotainment display 408 and/or the heads up display 410, accordingly.

In various embodiments, the alerts 426 and 436 alert the driver of the vehicle if one or more of the detected objects are potentially hazardous obstacles. For example, if the object is a hazardous obstacle such as stag, or other animal or object, etc. The system displays the alerts 426 and 436 in the infotainment display 408 and/or the heads up display 410. These alerts provide additional indications to increase awareness of hazards for the driver. While the word "Alert" is shown both in the example infotainment display 408 and the heads up display 410, the actual word or words may vary, and will depend on the particular implementation. For example, the system may display any words of warning such as "Warning," "Animal," "Boulder," etc. Also, the system may make the alert in a predetermined color (e.g., red, etc.) to enhance the alert. As such, the driver may slow down and turn to avoid hitting the object 112.

In various embodiments, the system also calculates the time of impact of the object 112 based on an estimated distance between the vehicle and the object 112 and based on the speed of the vehicle. In various embodiments, the system may use Lidar techniques to estimate the distance between the object 112 and the vehicle. In some embodiments, the system may provide a visual alert progression based on the distance of the object 112. For example, if the object is 300 yards away, the system may display the alerts 426 and 436 in yellow. If the object is 100 yards away, the system may display the alerts 426 and 436 in orange. If the object is 50 yards away, the system may display the alerts 426 and 436 in red. If the object is 25 yards away, the system may display the alerts 426 and 436 in flashing red. In some embodiments, the system may sound an audible alarm to further enhance the alert. For example, the system may activate a voice that states the potentially hazardous object (e.g., "Animal on the vehicle path!"). The system may also activate a voice that states the distance of the potentially hazardous object (e.g., "Animal on the vehicle path! 25 yards away! "). The particular color coding and audible alarms may vary, and will depend on the particular implementation.

As indicated above, the system may track known objects that could cause damage to a vehicle on specific roads or parking areas. Such known objects may include, for example, permanently placed objects such as speed bumps, high curb transitions between a parking lot or driveway and a road, etc., as well as temporarily placed objects such as street or parking lot barriers. Such known objects may be known from crowd sourced data fetched from the cloud and/or from data on the environmental that the system has detected, identified, and stored from previous trips. In such situations, the system may alert the driver or suggest alternative routes to avoid such known objects.

In some embodiments, and in these scenarios, the system may implement automatic evasive actions, such as automatically breaking to slow down or halt the vehicle. The system may also take control of the steering of the vehicle to automatically drive around the object 112. In this case of automatically driving around the object 112, the system may also determine that the external environment is safe to drive around the object 112. For example, before driving around the object 112, the system may first determine that there are no other cars to the side of the vehicle that the vehicle may hit.

As indicated above, in various embodiments, one or more objects in the path of the vehicle may be road markers. FIGS. 5 and 6 and associated descriptions below describe example embodiments directed to road markers.

FIG. 5 is a top-view block diagram of the example external environment 500, where the vehicle 104 is traveling on the vehicle path 110 with objects that include a dashed road line 502 and a solid road line 504 on the vehicle path 110. For ease of illustration, the perception sensor 106 and system 102 are not shown.

In this scenario, there is no hazardous obstacle on the vehicle path. The dashed road line 502 and the solid road line 504 are road markers that assist the driver in navigating the road. For example, the dashed road line 502 indicates to the driver the center road line in the road that separates the vehicle 104 from oncoming traffic. The solid road line 504 indicates to the driver the side road line in the road that separates the vehicle 104 from the shoulder of the road. In some scenarios, the driver of the vehicle 104 might not see the dashed road line 502 and the solid road line 504 due to poor visibility, or other factors such a poor lighting conditions, lack of reflection or a faded dashed road line 502 and/or a faded solid road line 504. In some scenarios, road lines may be non-existent.

FIG. 6 is a block diagram of an environment 600, showing a view toward the front interior of a vehicle. This portion of the vehicle shown may be that of the vehicle 104 shown in FIGS. 1 and 5. Shown is the dashboard 402, the windshield 404, the steering wheel 406, the infotainment display 408, and the heads up display 410. Also shown are the dashed road line 502 and the solid road line 504, which are road markers that assist the driver in navigating the road.

In this example scenario, the dashed road line 502 and the solid road line 504 are visible through the windshield 404. Also shown is a horizon 606. However, due to low or poor visibility, the driver might not see the dashed road line 502 and the solid road line 504. Such poor visibility may be caused by weather elements such as fog, rain, snow, mud, etc. Other factors causing poor visibility may include poor lighting conditions, a lack of reflection of the lines or a faded dashed road line 502 and/or a faded solid road line 504. In some scenarios, road lines may be non-existent.

In various embodiments, the system presents or displays the dashed road line 502 and the solid road line 504 in the heads up display 410 in the form of objects that are virtual road lines such as a virtual dashed road line 612 and a virtual solid road line 614. The virtual dashed road line 612 and the virtual solid road line 614 represent the physical dashed road line 502 and the solid road line 504, respectively. The system may also display a virtual horizon 616 to represent the actual horizon 606. In some scenarios, where road lines are non-existent, the system may generate or fetch virtual road lines from an on-board library or database, and then display the virtual road lines in the heads up display 410 to assist the driver in navigating the road. Both the virtual dashed road line 612 and the virtual solid road line 614 provide or increase visual awareness to the driver of the physical dashed road line 502 and the physical solid road line 504, which assist the driver in navigating the road, and thereby increase awareness of the external environment for safer driving.

In some embodiments, the system may augment the display of virtual road lines where lanes suddenly merge or end. For example, the system may color code virtual merging or ending road lines in a predetermined color such as red to increase awareness of the changing road situation. The system may also display an alert (e.g., "Lanes merging!" or "Lane ending!") to increase awareness of the changing road situation.

As indicated above, the heads up display 410 provides an augmented reality (AR) windshield showing the actual physical road and augments or overlays the road seen through the windshield 404 with the virtual dashed road line 612 and the virtual solid road line 614. In various embodiments, in the heads up display 410, the system may provide enhanced versions of the physical dashed road line 502 and a physical solid road line 504. For example, the system may capture the object 112 in the form of one or more images or video using one or more perception sensors. The system may process the images to enhance or clarify the images for better visibility. For example, the physical dashed road line 502 and a physical solid road line 504 may be obscured due to weather elements such as fog, rain, snow, mud, etc. They system may remove such weather elements from the images and display the physical dashed road line 502 and a physical solid road line 504 on the heads up display 410 in a clear manner without obscurement.

In various embodiments, in the heads up display 410, the system may provide substitute representations of the physical object. For example, the system might not capture a clear image of the physical dashed road line 502 and a physical solid road line 504 due to obscurement caused by weather elements such as fog, rain, snow, etc. Or, the headlights of the vehicle might suddenly go out. In such scenarios, the system may present or display shapes representing the physical dashed road line 502 and a physical solid road line 504 in the heads up display 410. In some embodiments, the system may create or fetch a representation of the physical dashed road line 502 and a physical solid road line 504, and then display the representation in the heads up display 410.

In various implementations, the system positions the virtual dashed road line 612 and a virtual solid road line 614 in the heads up display 410 at comparable locations to the position of the actual physical dashed road line 502 and physical solid road line 504 in the windshield 404. This enables the driver of the vehicle to navigate the road based on the virtual dashed road line 612 and a virtual solid road line 614 in the heads up display 410.

In some scenarios, it may be difficult to tell what color road lines are, making it difficult for the driver to know if a traffic lane is designed for traveling in the same direction or in the opposite direction on a given roadway. In some embodiments, the system may color code displayed virtual road lines accordingly.

In various embodiments, the system may utilize its perception sensors and/or use AI and machine learning to track other known objects that facilitate safe driving. For example, in some scenarios, the system may track and present road signs, street signs, etc. and display these objects in the heads up display 410 to facilitate safe driving. The system may display any virtual objects representing any hazardous obstacles in the heads up display 410 as they arise.

In various embodiments, the system may generate virtual road lines based on prior knowledge, including the geographical location of the vehicle and a destination provided by the driver. For example, when driver provides a destination, the system may calculate all the areas where there are poorly visible road markings or non-existent road markings. The system may prepare an augmented view with virtual road lines and/or road markings prior to reaching the location having poor visibility or non-existent road markings. The system may at an appropriate time before reaching the location, display the virtual road lines and/or road markings in the heads up display 410 as the driver is driving the vehicle.

In some embodiments, the system may enable the driver to manually turn on the presentation of virtual road markings. If the system determines that it would be safer to display such virtual road markings due to low lighting, non-existent road markings, or other predetermined criteria, the system may automatically display the virtual road markings in the heads up display. In various embodiments, the system may fetch crowdsourced data on historical accidents and display appropriate caution symbols in areas where there are historically high numbers of traffic accidents.

In some embodiments, the system may initiate autonomous driving if the driver is driving the vehicle in a reckless manner due to unsafe conditions. For example, the driver may be driving off of the road or into oncoming traffic due to poor visibility of the road lines. The driver may be swerving due to a wet or slippery road condition. The driver might not be slowing down when an oncoming hazardous vehicle is approaching. The system may initiate autonomous driving and control the movement, speed, and direction of the vehicle in a safe manner in any of these situations or like situations or combination thereof.

Embodiments described herein have numerous benefits. For example, embodiments automatically detect and identify objects located in the path of a vehicle that the driver might not see due to poor visibility. Embodiments also automatically uses perception sensors to detect, identify, and display such objects in a display to assist the driver in safe driving, where such objects may include potentially hazardous objects and/or road lines or other signage that facilitate safe driving.

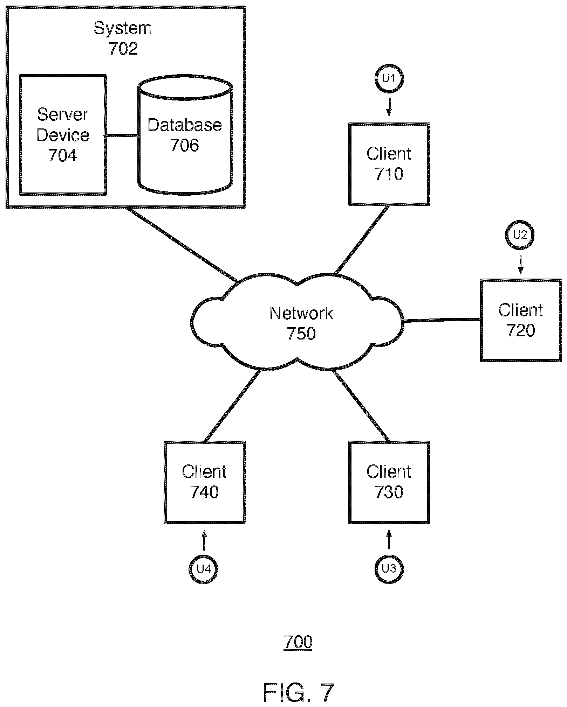

FIG. 7 is a block diagram of an example network environment 700 of the present disclosure. In some implementations, network environment 700 includes a system 702, which includes a server device 704 and a database 706. In various implementations, system 702 may be used to implement system 102 of FIG. 1, as well as to perform implementations described herein. Network environment 700 also includes client devices 710, 720, 730, and 740, which may communicate with system 702 and/or may communicate with each other directly or via system 702. Network environment 700 also includes a network 750 through which system 702 and client devices 710, 720, 730, and 740 communicate. Network 750 may be any suitable communication network such as a Wi-Fi network, Bluetooth network, the Internet, etc.

For ease of illustration, FIG. 7 shows one block for each of system 702, server device 704, and network database 706, and shows four blocks for client devices 710, 720, 730, and 740. Blocks 702, 704, and 706 may represent multiple systems, server devices, and network databases. Also, there may be any number of client devices. In other implementations, environment 700 may not have all of the components shown and/or may have other elements including other types of elements instead of, or in addition to, those shown herein.

While server device 704 of system 702 performs implementations described herein, in other implementations, any suitable component or combination of components associated with system 702 or any suitable processor or processors associated with system 702 may facilitate performing the implementations described herein.

In the various implementations described herein, a processor of system 702 and/or a processor of any client device 710, 720, 730, and 740 may cause the elements described herein (e.g., information, etc.) to be displayed in a user interface on one or more display screens.

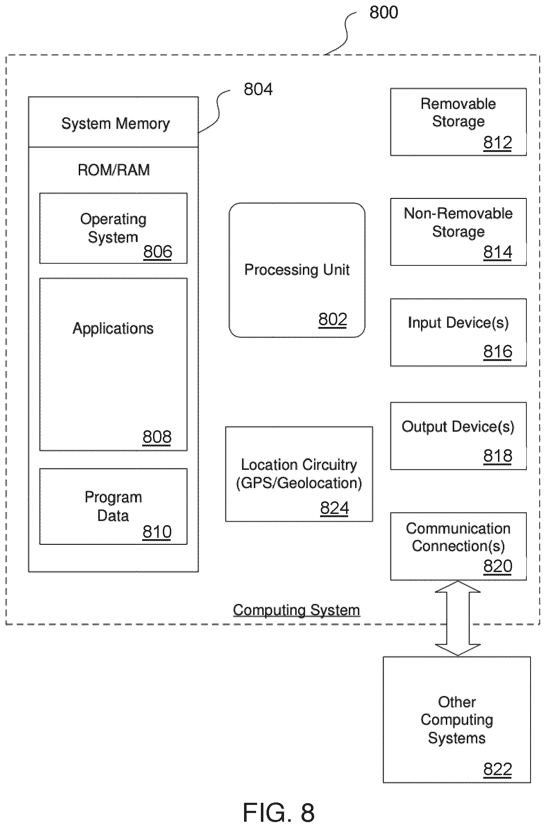

FIG. 8 is a block diagram of an example computing system 800 of the present disclosure. The computing system 800 may be used to implement the server of system 702 of FIG. 7 and/or the system 102 of FIG. 1, as well as to perform implementations described herein.

The computing system 800 typically includes at least one processing unit 802 and a system memory 804. Depending on the particular configuration and type of computing device, the system memory 804 may be volatile such as random-access memory (RAM), non-volatile such as read-only memory (ROM), flash memory, and the like, or some combination of volatile memory and non-volatile memory. The system memory 804 typically maintains an operating system 806, one or more applications 808, and program data 810. The operating system 806 may include any number of operating systems executable on desktops or portable devices including, but not limited to, Linux, Microsoft Windows^{®}, Apple OS^{®}, or Android^{®}.

The computing system 800 may also have additional features or functionality. For example, the computing system 800 may also include additional data storage devices (removable and/or non-removable) such as, for example, magnetic disks, optical disks, tape, or flash memory. Such additional storage may include removable storage 812 and non-removable storage 814. Computer storage media may include volatile and non-volatile, removable and non-removable media implemented in any method or technology for storage of information, such as computer-readable instructions, data structures, program modules or other data. The system memory 804, the removable storage 812, and the non-removable storage 814 are all examples of computer storage media. Available types of computer storage media include, but are not limited to, RAM, ROM, EEPROM, flash memory (in both removable and non-removable forms) or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by the computing system 800. Any such computer storage media may be part of the computing system 800.

The computing system 800 may also have input device(s) 816 such as a keyboard, mouse, pen, voice input device, touchscreen input device, etc. Output device(s) 818 such as a display, speakers, printer, short-range transceivers such as a Bluetooth transceiver, etc., may also be included. The computing system 800 also may include one or more communication connections 820 that allow the computing system 800 to communicate with other computing systems 822, such as over a wired or wireless network or via Bluetooth (a Bluetooth transceiver may be regarded as an input/output device and a communications connection). The one or more communication connections 820 are an example of communication media. Available forms of communication media typically carry computer-readable instructions, data structures, program modules or other data in a modulated data signal such as a carrier wave or other transport mechanism and include any information delivery media. The term "modulated data signal" may include a signal that has one or more of its characteristics set or changed in such a manner as to encode information in the signal. By way of illustrative example only and not of limitation, communication media may include wired media such as a wired network or direct-wired connection, and wireless media such as acoustic, radio frequency (RF), infrared and other wireless media. The term computer-readable media as used herein includes both storage media and communication media.

The computing system 800 may also include location circuitry 824. In various embodiments, the location circuitry 824 may include circuitry including global positioning system (GPS) circuitry and/or geolocation circuitry. The location circuitry 824 may automatically discern its location based on relative positions to multiple GPS satellites and/or triangulation using cellular carrier network(s) and/or IEEE Standard 802.11 wireless (Wi-Fi) networks (collectively referred to as "geolocation services") to determine location based on multiple cellular communications facilities and/or multiple Wi-Fi networks. The location circuitry 824, including GPS circuitry and/or geolocation circuitry, is frequently incorporated in smartphones and many other tablets or other portable devices. In various embodiments, computing system 800 may not have all of the components shown and/or may have other elements including other types of components instead of, or in addition to, those shown herein.

Although the present disclosure is illustrated and described herein with reference to illustrative embodiments and specific examples provided, it will be readily apparent to those of ordinary skill in the art that other embodiments and examples may perform similar functions and/or achieve like results. All such equivalent embodiment and examples are within the spirit and scope of the present disclosure and are intended to be covered by the following non-limiting claims for all purposes.

## Claims

1. A computer-implemented method for providing awareness of objects located in a path of a vehicle, the method comprising:
capturing data on an external environment using at least one perception sensor;
detecting one or more objects in the path of the vehicle based on the data that is captured;
estimating locations of the one or more objects in the path of the vehicle; and
presenting one or more virtual objects using at least one display positioned inside the vehicle, wherein the one or more virtual objects represent the one or more objects that are detected.

2. The method of claim 1, wherein the one or more objects in the path of the vehicle are hazardous obstacles and/or road markers.

3. The method of any of the previous claims, further comprising fetching crowdsourced data on potentially hazardous obstacles in the path of the vehicle and/or alerting a driver of the vehicle if one or more of the detected objects are potentially hazardous obstacles.

4. The method of any of the previous claims, wherein the one or more virtual objects presented using the at least one display are virtual hazardous obstacles.

5. The method of any of the previous claims, wherein the one or more objects presented using the at least one display are virtual road lines.

6. The method of any of the previous claims, wherein the at least one perception sensor may comprise at least one of a camera, a radar detector, a light detection and ranging, Lidar, camera, or an ultrasonic camera.

7. An assembly for a vehicle, the assembly comprising:
at least one perception sensor;
at least one display positioned inside the vehicle; and
a system comprising one or more processors and logic encoded in one or more non-transitory computer-readable storage media for execution by the one or more processors and when executed operable to cause the one or more processors to perform operations comprising:
capturing data on an external environment using the at least one perception sensor;
detecting one or more objects in a path of the vehicle based on the data that is captured;
estimating locations of the one or more objects in the path of the vehicle; and
presenting one or more virtual objects using the at least one display positioned inside the vehicle, wherein the one or more virtual objects represent the one or more objects that are detected.

8. The assembly of claim 7, wherein the one or more objects in the path of the vehicle are hazardous obstaclesa and/or road markers.

9. The assembly of any of claims 7-8, wherein the logic when executed is further operable to cause the one or more processors to perform operations comprising fetching crowdsourced data on potentially hazardous obstacles in the path of the vehicle and/or operations comprising alerting a driver of the vehicle if one or more of the detected objects are potentially hazardous obstacles.

10. The assembly of any of claims 7-9, wherein the one or more virtual objects presented using the at least one display are virtual hazardous obstacles.

11. The assembly of any of claims 7-10, wherein the one or more objects presented using the at least one display are virtual road lines.

12. The assembly of any of claims 7-11, wherein the at least one perception sensor may comprise at least one of a camera, a radar detector, a light detection and ranging, Lidar, camera, or an ultrasonic camera.

13. A non-transitory computer-readable storage medium with program instructions stored thereon, the program instructions when executed by one or more processors are operable to cause the one or more processors to perform operations comprising:
capturing data on an external environment using at least one perception sensor;
detecting one or more objects in a path of the vehicle based on the data that is captured;
estimating locations of the one or more objects in the path of the vehicle; and
presenting one or more virtual objects using at least one display positioned inside the vehicle, wherein the one or more virtual objects represent the one or more objects that are detected.

14. The computer-readable storage medium of claim 13, wherein the one or more objects in the path of the vehicle are hazardous obstacles and/or road markers.

15. The computer-readable storage medium of any of claims 13-14, wherein the instructions when executed are further operable to cause the one or more processors to perform operations comprising fetching crowdsourced data on potentially hazardous obstacles in the path of the vehicle.
